# EUROPÄISCHE PATENTSCHRIFT

(11) **EP 0 807 422 B1**
(45) Veröffentlichungstag und Bekanntmachung des Hinweises auf die Patenterteilung: **03.11.2004**
(21) Anmeldenummer: 97106979.4
(22) Anmeldetag: 27.04.1997
(51) Int. Cl.: A61C 13/08, A61C 5/10

(54) **Verfahren zur Herstellung dentaler Rekonstruktionen und Rohling zur Durchführung des Verfahrens**
Method for manufacturing dental reconstructions and blank for carrying out the method
Procédé pour la production de reconstructions dentaires et ébauche pour la mise en oeuvre du procédé

(30) Priorität: 17.05.1996 CH 125196
(43) Veröffentlichungstag der Anmeldung: 19.11.1997
(73) Patentinhaber: Brandestini, Marco, Dr., 6926 Montagnola (CH); Mörmann, Jeanette, 8053 Zürich (CH)
(72) Erfinder: Mörmann, Jeanette, Dr. Sc. nat., 8053 Zürich (CH)
(74) Vertreter: Blum, Rudolf Emil Ernst

(56) Entgegenhaltungen:
- EP-A- 0 160 797
- EP-A- 0 455 854
- EP-A- 0 480 209
- EP-A- 0 482 000

## Beschreibung

Die vorliegende Erfindung betrifft einen Rohling bzw. ein Verfahren zur Herstellung künstlicher Zahnteile sowie ein Verfahren zur Herstellung des Rohlings gemäss den Oberbegriffen der unabhängigen Patentansprüche. Dabei wird von EP 455 854 als nächsten Stand der Technik ausgegangen, wo ein Rohling mit einem Verstärkungsbereich aus Metall offenbart ist.

Die Herstellung von dentalen Rekonstruktionen in Form von Kronen und Brücken ist traditionell im zahntechnischen Labor angesiedelt, weil die erforderliche belastungssichere und dauerhafte Festigkeit bisher nur durch den vielstufigen, arbeitsintensiven Aufbau von Verbundkörpern aus belastungstragenden Materialien einerseits und schwächeren Verblendmaterialien andererseits erreicht wurde.

Die Herstellung dentaler Rekonstruktionskörper aus Verbundmaterial repräsentiert besonders in Form der Verbund-Metall-Keramischen (VMK) Rekonstruktionen den traditionellen Stand der Technik. Dabei wird auf ein durch Abformung einer Zahnpräparation gewonnenes Arbeitsmodell gusstechnisch eine tragende Unterkonstruktion aus Metall angepasst und dann die Zahnform und -Farbe durch Aufbrennen von Keramikmaterial manuell formgebend ergänzt. Die Kombination des hochfesten Trägermaterials mit dem farbgebenden Verblendmaterial hat sich in der Zahnmedizin als dauerhafte Rekonstruktionsmethode bewährt.

In einem anderen Verfahrensweg werden für Einzelzahnkronen zur Gewinnung der erforderlichen Kaukraftstabilität zunächst Unterkonstruktionen aus heissgepresster Glaskeramik (IPS-Empress) gefertigt, die den Zahnstumpf in Form von ca. 0.5 mm dicken Kappen oder Hütchen überdecken, und auf diese brennt der Zahntechniker die zur Form- und Farbergänzung nötige Verblendkeramik auf.

In neuerer Zeit wurden manuell- (Celay) und computergesteuerte Methoden (Cerec u.a.) bekannt, mit denen dentale Rekonstruktionen und Rekonstruktionsteile aus einphasigen Porzellan- und Keramikmaterialien oder auch Kunststoff- bzw. Kompositmaterialien in Form von Rohlingsblöcken formschleifend in einem einstufigen Prozess gebrauchsfertig hergestellt werden, siehe z.B. W. H. Mörmann, M. Brandestini, Die CEREC Computer Reconstruction", 1989, Quintessenz Verlags-GmbH, Berlin, ISBN 3-87652-550-0. Beispielsweise werden mit der computergestützten Cerec-Restaurationstechnik Rohlingsblöcke aus Feldspatporzellan zur Fertigung von im wesentlichen intrakoronalen (Inlays, Onlays) oder nur verblendenden (Veneers) Restaurationskörpern verwendet, wie sie in EP-A-160 797 beschrieben sind.

In einer gattungsfremden Methode gemäss EP-A-482 000 werden zur Herstellung ganzer, künstlicher Zähne durch maschinelle Abtragung mit der Hennson/Sopha CAD/CAM-Schleiftechnik farbgeschichtete Kunststoffblöcke vorgeschlagen, deren vorgefertigter Schichtverlauf mit Hilfe von Referenzinformationen selektiv freigelegt werden sollte. Andere Formschleif- bzw. Frästechniken stellen vor allem Metallkappen und Brückenteile für die anschliessende Verblendung mit Keramik her (DCS). Diese Restaurationen werden für die makromechanische Verankerung konstruiert und können dann konventionell mit Phosphatzement eingesetzt werden.

In einem anderen Verfahrensweg werden Alumina Rohlingsblöcke aus porös gesinterter Aluminiumoxidkeramik oder auch porös gesinterte Blöcke aus Spinell nach der Cerec- oder Celay-Formschleiftechnik bearbeitet. Die entstehenden Formteile mit offenporiger Struktur werden nachträglich auf dem zahntechnischen Wege mit Glas (Lanthangläser) heiss-infiltriert (In-Ceramtechnik), wodurch kronen- und brückentaugliche Festigkeitswerte entstehen.

Im weiteren kann hochfeste, dicht gesinterte Oxidkeramik (Zirkon, Alumina) im zahntechnischen Labor mit der Sonoerosionstechnik zu grazilen Restaurationskörpern verarbeitet werden, auf die dann noch labortechnisch farbgebende Schichten aufgebrannt werden. Die bisher erwähnten, bekannten Verfahren zur Herstellung künstlicher Zahnteile benötigen also mehrere Schritte, um gebrauchsfertige Kronen- und Brückenteile, d.h. extrakoronale Restaurationen bereitzustellen, da diese aus mindestens zwei verbundenen Materialien bestehen, von denen eines die Bruchfestigkeit und ein anderes, schwächeres die naturähnliche Zahnfarbe gewährleistet.

Zweck der vorliegenden Erfindung ist die Vereinfachung der Herstellung gebrauchsfertiger Kronen- und Brückenteile und anderer partieller Zahnrekonstruktionen mit möglichst guten mechanischen Eigenschaften.

Diese Aufgabe wird durch die Gegenstände der unabhängigen Ansprüche gelöst.

Da der anspruchsgemässe Rohling bereits Bereiche unterschiedlicher Bruchfestigkeit besitzt, kann das gebrauchsfertige Endprodukt in einem einzigen, maschinellen Formprozess geformt werden. Im so hergestellten künstlichen Zahnteil gewährt der erste Bereich, im Folgenden Verstärkungsbereich genannt, die nötige mechanische Festigkeit, während der zweite Bereich, im Folgenden Bearbeitungsbereich genannt, aus einem Material bestehen kann, das einfach bearbeitbar ist bzw. dessen Eigenschaften (z. B. Elastizität, Struktur, Farbe) den jeweiligen Anforderungen anpassbar sind.

Dabei sollte der Verstärkungsbereich in möglichst vordefinierter räumlicher Relation zu den Befestigungsmitteln des Rohlings stehen. Damit ist die Position des Verstärkungsbereichs im Bearbeitungswerkzeug bekannt und es wird möglich, beim Formschleifen der dentalen Rekonstruktion sicherzustellen, dass der Verstärkungsbereich an stark belasteten, okklusalen Teilen der Rekonstruktion eine Mindestdicke aufweist. Insbesondere sollte der Verstärkungsbereich bei einer Zahnkrone okklusal vorzugsweise eine Dicke von 0.5 mm nicht unterschreiten.

Der Verstärkungsbereich bildet eine im wesentlichen ebene Platte. Es zeigt sich, dass ein so geformter, einfach herstellbarer Verstärkungsbereich eine ausreichende Verstärkung gewährleistet. In einer besonders bevorzugten Ausführung umfasst der Körper mehrere Laminatschichten, welche vorzugsweise eben sind. Dadurch wird die Herstellung des Rohlings weiter vereinfacht.

Der Verstärkungsbereich wird am besten zwischen einem Kaufunktionsbereich und dem Bearbeitungsbereich angeordnet. Der Kaufunktionsbereich weist eine hohe Beständigkeit gegenüber der Kauabrasion auf, und der Verstärkungsbereich erlaubt eine optimale Verteilung der Kaukräfte, während der übrige Bearbeitungsbereich im wesentlichen zur Herstellung des Formschlusses mit der restlichen Zahnhartsubstanz und zur Formergänzung des Zahnes dient. Auf diese Weise kann eine Rekonstruktion hergestellt werden, die okklusal dank dem Kaufunktionsbereich und dem Verstärkungsbereich eine den biologischen Verhältnissen angepasste Kauabrasionsbeständigkeit und Bruchfestigkeit aufweist, während die übrigen Bereiche z.B. auf gute Bearbeitbarkeit optimiert werden können.

Der Körper des Rohlings sollte vorzugsweise aus Keramik, Kompositmaterial, Gläsern und/oder hochfesten Polymermaterialien bestehen. Diese Werkstoffe können zahnfarben hergestellt werden, so dass sich die einzelnen Bereiche bis an die Oberfläche der dentalen Rekonstruktion erstrecken können.

Der erfindungsgemässe Rohling eignet sich insbesondere für die Herstellung von Inlays, Overlays, teilweisen und vollständigen Kronen und Brücken, d. h. Teilen eines Zahnes oder ganzer Zähne. Obwohl diese Teile unter Umständen sehr dünn bzw. fein sind, können mittels geeigneter Positionierung und Verarbeitung des Verstärkungsbereichs die nötige Festigkeit und die gewünschten elastischen Eigenschaften der Rekonstruktion gewährleistet werden.

Weitere Vorteile und Anwendungen der Erfindung ergeben sich aus der nun folgenden Beschreibung einiger Ausführungsbeispiele anhand der beiliegenden Figuren.
Darin zeigen:
Fig. 1 ein Flussdiagramm der Herstellung des Rohlings und dessen Bearbeitung,
Fig. 2 eine erste Variante des Tragteils in perspektivischer Darstellung,
Fig. 3 eine erste Variante eines vollständigen Verbundkörpers mit der ersten Variante des Tragteils gemäss Fig. 2 in perspektivischer Darstellung,
Fig. 4 eine zweite Variante eines vollständigen Rohlings,
Fig. 5 die mesiale und distale Anordnung des Rohlings bei einer Kronenstumpfpräparation,
Fig. 6 einen schematischen mesio-distalen Vertikalschnitt durch eine Krone hergestellt aus dem Verbundkörper von Fig. 3,
Fig. 7 einen Schnitt entlang Linie VII-VII von Fig. 6,
Fig. 8 einen schematischen mesio-distalen Vertikalschnitt durch eine Krone hergestellt aus einem laminierten Verbundkörper, und
Fig. 9 einen Schnitt entlang Linie IX-IX von Fig. 8.

Im folgenden werden nun kurz die Schritte zur Herstellung des erfindungsgemässen Rohlings und zu dessen Verarbeitung beschrieben. Sodann werden einige konkrete Ausführungen des Rohlings diskutiert.

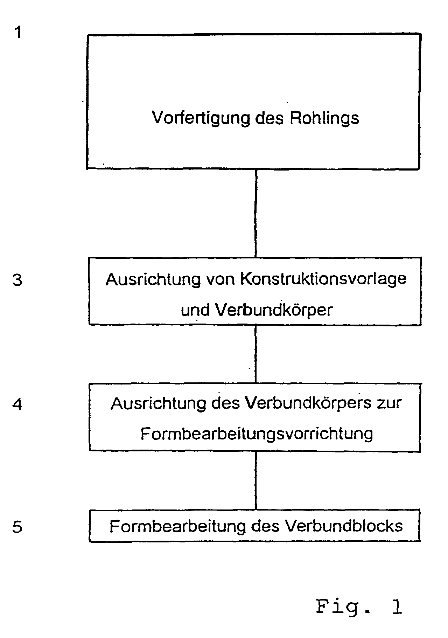

Fig. 1 zeigt die Verfahrensschritte bei der Herstellung des Rohlings und dessen nachfolgender Verarbeitung zur dentalen Rekonstruktion.

In Schritt 1 wird der Rohling industriell hergestellt. Dabei geht es darum, im Verbundkörper des Rohlings einen Bereich mit optimalen Kaueigenschaften, einen Bereich grosser Bruchfestigkeit und einen Bereich aus resilienterem, gut bearbeitbarem Material bereitzustellen. In der fertigen Restauration wird Material des Verstärkungsbereichs eine Verstärkungsstruktur bilden, die der Restauration die nötige mechanische Bruchfestigkeit verleiht.

Die Herstellung des Rohlings kann auf verschiedene Weise geschehen. Im folgenden werden zwei Mögliche Verfahren kurz beschrieben.

In einem ersten, bevorzugten Herstellungsprozess wird ein Rohling, wie er z.B. in Fig. 4 gezeigt ist, schichtweise aus vorgefertigten, planaren Lagen bzw. Laminaten aus Komposit und/oder Keramik bzw. Glas, Kohlenstoff oder anderen geeigneten Materialien aufgebaut. Die Schichten können dabei entweder adhäsiv, z.B. unter Verwendung von Komposit als Klebstoff, verbunden werden, oder Keramiklaminate können auch durch Verbundbrand miteinander verbunden bzw. mittels Coatingverfahren aufgebaut werden. Auch können Lagen aus offenporiger Keramik mit gleicher oder unterschiedlicher Porenstruktur mit Hilfe von Polymeren miteinander verbunden werden. Dabei wird das Polymer einerseits in die Poren eingelagert, andererseits bildet es eine Verbindung zwischen den einzelnen Lagen. (Zur Technik der offenporigen, polymerbehandelten Keramiken wird verwiesen auf Marks et al., J.Dent.Res. 75:148 Abstr. No 1041, 1996.) Die Schichtdicke wird dabei beliebig nach den mechanischen, belastungstechnischen und optischen Eigenschaften gewählt und liegt zwischen dem Submikronbereich (kleiner als 1 Mikrometer) und einigen Millimetern. In seiner einfachsten Form besteht der so hergestellte Körper des Rohlings zur Hälfte aus einer Keramik- und einer Kompositschicht, wobei eine der Schichten den Verstärkungsbereich bildet. Es ist aber auch denkbar, dass Schichten von Komposit bzw. Keramik unterschiedlicher Konstruktion und Zusammensetzung gebildet werden, wobei die Verstärkung durch die speziellen Materialeigenschaften gewährleistet wird, oder aber die Verstärkung des Rohlings durch die Art der Schichtungsanordnung, der Laminatdicke, der Laminatkombination, des Laminatverbundes oder mit Kombinationen dieser Elemente erreicht wird. Es ist auch denkbar, dass Keramiken mit unterschiedlichen Wärmeausdehnungskoeffizienten zur Herstellung des Rohlings verwendet werden. Die dadurch erzeugte mechanische Verspannung verstärkt die Schichten und erhöht insbesondere die Bruchfestigkeit.

Dieses Herstellungsverfahren ermöglicht die Vorfertigung von Materialschichten bzw. Materiallagen, was gegenüber der monophasigen Fertigung von Kronenrohlingen mit Abmessungen von z.B. 12 x 14 x 18 mm aus Komposit oder Keramik eine bessere Qualitätskontrolle erlaubt. Die Schwierigkeit, grosse Materialkörper lunker- bzw. porenfrei ohne Schwachstellen herzustellen, wird beim laminierten Verbundrohling vermieden.

In einem zweiten möglichen Herstellungsverfahren wird ein Rohling, wie er z.B. in Fig. 3 gezeigt ist, in mindestens zwei Vorfertigungsschritten hergestellt, nämlich einem ersten Schritt zur Vorfertigung des Verstärkungsbereichs aus Material hoher Bruchfestigkeit und dem zweiten Schritt zur Formergänzung zum Verbundkörper mit dentalem Verblendmaterial bzw. Bearbeitungsmaterial. Die Vorfertigung des Verstärkungsbereichs geschieht durch Giessen, Schlickern, Heisspressen oder Trockenpressen und Sintern, Extrudieren oder Abtragung. Der Verstärkungsbereich kann dabei in seinen Dimensionen an eine typische Restaurationsgrösse angepasst werden. Als Verstärkungsmaterial kommt insbesondere dichtgesinterte Keramik aus Aluminiumoxid, Zirkonoxid, Magnesiumoxid, Siliziumdioxid oder Kombinationen hiervon oder hochfestes Polymermaterial in Frage. Metall kann verwendet werden, wenn der Verstärkungsbereich in der fertigen Rekonstruktion nicht an die Oberfläche tritt. In diesem Falle ist Titan unter den Metallen bevorzugt. Nach der Ausformung des Verstärkungsbereichs wird dieser zum Rohlingskörper ergänzt, entweder ohne spezielle Vorbehandlung oder mit einer Vorbereitung des Verstärkungsbereichs durch Auftragen bzw. Bildung einer haftvermittelnden Zwischenschicht. Die untrennbare Formergänzung des Verstärkungsbereichs mit einem Material des Bearbeitungsbereichs zu einem Verbundkörper geschieht durch Hitze- und Druckpolymerisation, Heisspressen oder Trockenpressen und Sintern bzw. Brennvorgang zu einem einer typischen Restaurationsgrösse angepassten Materialblock, der in allen Teilen abtragend bearbeitbar ist. Es ist auch möglich, verschiedene Bereiche parallel zu bilden, beispielsweise durch Co-Extrusion unterschiedlicher Keramikmassen, und mit nachfolgendem Brennen. Im weiteren ist auch das Auftragen von Keramikschichten im Tauchverfahren oder Plasmaspritzen denkbar.

Unabhängig vom Herstellungsverfahren wird der Verstärkungsbereich vorzugsweise so im Rohling angeordnet, dass sein dem inneren Anteil der Kaufläche der Restauration zugeordneter Abschnitt mit seiner mesio-distalen Raumachse sich bei einem nachfolgenden Formschleif^{p}rozess mit der zentralen Schleifachse der Rekonstruktion ungefähr deckt.

Der Rohling muss mit geeigneten Befestigungs- bzw. Orientierungsmitteln ausgerüstet sein, die es erlauben, ihn so in ein Bearbeitungswerkzeug einzuspannen, dass die Position des Verstärkungsbereichs bekannt ist. Die Orientierungsmittel können direkt mit dem Verstärkungsteil verbunden oder am fertigen Verbundkörper angeordnet werden.

Mit Abschluss des Schritts 1 von Fig. 1 liegt der fertige Rohling vor. Die übrigen Verfahrensschritte 3 - 5 nach Fig. 1 können in der zahnärztlichen Praxis ausgeführt werden. Hierzu wird der Zahnarzt den Zahn zuerst präparieren, so dass die Form der gewünschten Rekonstruktion als Konstruktionsvorlage feststeht.

Der dritte Verfahrensschritt 3 besteht nun in der räumlichen Ausrichtung von Konstruktionsvorlage und Verbundkörper zueinander. Hierzu wird die räumliche Kontur des Verstärkungsbereichs im Verbundkörper so ausgerichtet, dass er sich mit der gewünschten Tragstruktur in der Okklusalfläche deckt. Die Raumzuordnung des Verbundkörpers zur räumlichen Schleifvorlage hat so zu geschehen, dass der Verstärkungsbereich beim Schleifen der inneren Passform mindestens teilweise als tragendes Element erhalten bleibt. Der räumliche Rekonstruktionsbezug wird entweder zu einer manuell erzeugten Vor-Rekonstruktion (z.B. Kunststoffkrone) oder zu einem digitalisierten Datensatz (z.B. optisch-dreidimensionale Bilddaten, "optischer Abdruck") hergestellt. Hierzu gibt es verschiedene Möglichkeiten, die einzeln oder zum Teil auch kombiniert verwendet werden können:
a) Für die ungefähre Ausrichtung, z.B. eines physischen Kronenmodells, können auf den Verbundkörperaussenflächen Markierungslinien angebracht sein, die auf die Innenlage des Verstärkungsbereiches hinweisen und nach denen der Verbundkörper in einer Formschleifmaschine ausgerichtet werden kann;
b) Bei einer optischen Abdrucknahme wird die Kamera entsprechend der zentralen, mesio-distalen Zahnreihenachse ausgerichtet. Der so ermittelte Datensatz legt die Schleifachse in der Zahnreihenachse fest. Es können auch die innenliegenden Konturen des Verstärkungsbereichs mit der Aussenkontur des zu verwendenden Rohlings als Overlay in ein Monitorbild eingeblendet werden und die Kamera wird vom Benutzer bei der Aufnahme so gehalten, dass der tragende Verbundblockteil die individuelle Präparation mindestens in der Horizontalebene bestimmungsgemäss überlagert;
c) Die räumliche Zuordnung von optisch-dreidimensionalen Bilddaten zum Verbundkörper wird automatisch durch Bildüberlagerung rechnergestützt durchgeführt, wobei die räumlichen Daten der Präparationsoberflächen den Oberflächendaten der im passenden Verbundkörper zur Verfügung stehenden inneren tragenden Anteile durch Anwendung eines geeigneten Ueberlagerungs-('Matching-') Algorithmus in allen Raumkoordinaten bestimmungsgemäss angepasst werden.

Der vierte Verfahrensschritt 4 besteht in der räumlichen Ausrichtung des Verbundkörpers bzw. des Verstärkungsbereichs zur Formbearbeitungsvorrichtung. Hierbei wird die Raumlage des Verstärkungsbereichs relativ zum Bearbeitungswerkzeug festgelegt. Dabei kann zum Beispiel die Längsachse des Verstärkungsbereichs mit der Rotationsachse eines Bearbeitungswerkzeugs in Deckung gebracht und die Winkelposition durch einen Anschlag am Halter festgelegt werden. Zu diesem Zweck sind am Befestigungsmittel des Rohlings Orientierungshilfen vorgesehen, die es erlauben, die nötige Raumrelation zwischen Bearbeitungswerkzeug und Verstärkungsbereich herzustellen. Die Orientierungshilfen können in verschiedenster Art bereitgestellt werden, z.B. als:
a) eine kontinuierliche Verlängerung des Verstärkungsbereichs und mit einer Ausbildung als Werkstückhalter mit Referenzflächen ausserhalb des Verbundkörpers;
b) ein separat geformter Werkstückhalter, der mit dem Verstärkungsbereich formschlüssig verbunden ist; oder
c) ein separat gefertigter Werkstückhalter, der mit dem Verbundkörper formschlüssig verbunden ist, wobei die relative Lage des Werkstückhalters zum Verstärkungsbereich bekannt ist, z.B. indem die Längsrotationsachse des Verstärkungsbereichs mit der Längsrotationsachse des tragenden Teils zusammenfällt.

Im fünften Verfahrensschritt 5 erfolgt schliesslich die Formbearbeitung des Verbundkörpers mit bekannten, abtragend arbeitenden Vorrichtungen, insbesondere durch Formschleifen. Die Materialabtragung geschieht in erster Linie im Bearbeitungsbereich, zum Teil aber auch im Verstärkungsbereich und/oder Kaufunktionsbereich. Dabei wird der Rohling vorzugsweise so angeordnet, dass die distale Rekonstruktionsfläche werkstückhalterseitig zu liegen kommt, wodurch er eventuell auf dieser Seite zutage tretende Verstärkungsbereich auf die von der Mundöffnung her nicht direkt einsehbare Seite der Rekonstruktion verlegt wird. Das Verstärkungsmaterial im inneren okklusalen Bereich der Rekonstruktion sollte mindestens teilweise die Stärke von 0,5 mm nicht unterschreiten.

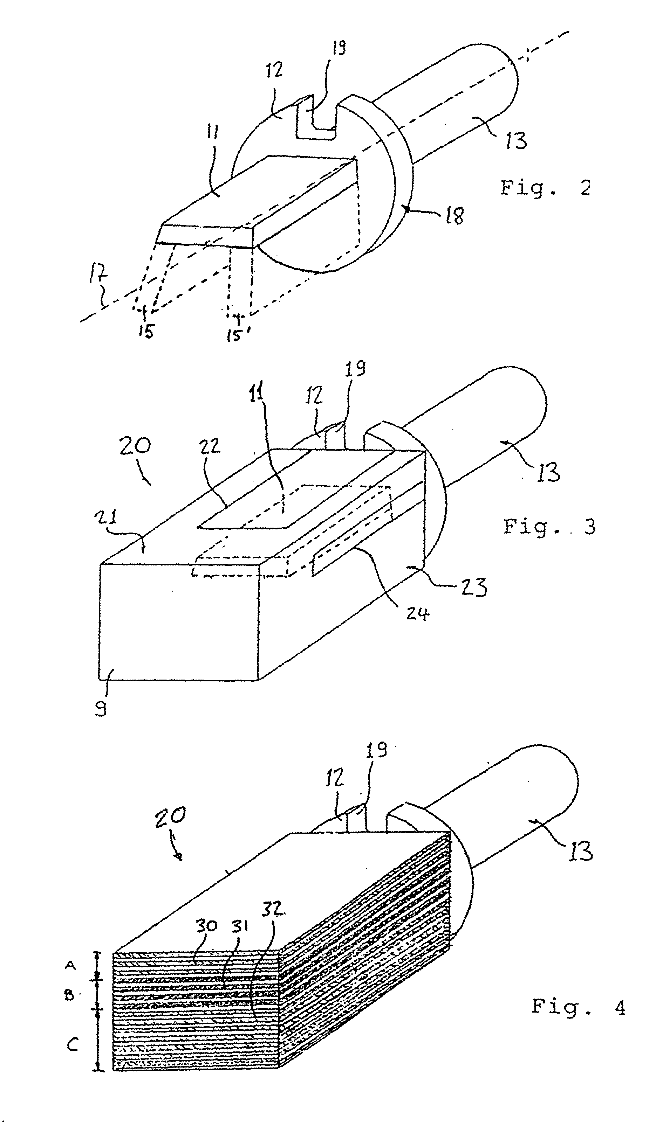

In Fig. 2 ist eine erste Variante des Rohlings abgebildet, wobei der Bearbeitungsbereich nicht dargestellt ist. In dieser Ausführung hat der Verstärkungsbereich 11 die Form einer ebenen Platte. Diese Platte ist mit einem Befestigungsmittel bestehend aus Referenz- und Kalibrierungsteil 12 und Halterteil 13 verbunden.

Der Verstärkungsbereich 11 weist vorzugsweise eine derartige Formgebung auf, dass die nachfolgende Materialabtragung am Verstärkungsmaterial auf ein Minimum beschränkt werden kann, was in Fig. 2 durch die Plattenform mit einer Wandstärke von ca. 0.5 bis 3.0 Millimetern erreicht wird. In der fertigen Rekonstruktion liegt der Verstärkungsbereich im Kauflächenteil (z.B. einer Krone). Er wird vorzugsweise nahe bei der Rohlingsachse 17 aber etwas ausserhalb der Mitte angeordnet.

Der Verstärkungsbereich 11 kann z. B. auch als im wesentlichen u-förmiges Profil ausgestaltet sein, mit Längsachse parallel zur Rohlingsachse 17 und einem Oeffnungswinkel der Seitenschenkel von ca. 10°. Die Schenkel 15, 15' eines solchen Profils sind in Fig. 2 gestrichelt angedeutet. Die u-Form ist der einer Kronenstumpfpräparation ähnlich und ermöglicht eine zusätzliche Verstärkung der Seiten der Rekonstruktion, aber gleichzeitig eine Einsparung von Verstärkungsmaterial und eine Schonung der Werkzeuge. Der Verstärkungsbereich kann auch gebogen sein und/oder die Form eines L-Profils besitzen.

Der Referenz- und Kalibrierungsteil 12 des Befestigungsteils ist rotationssymmetrisch zylindrisch gestaltet und eng toleriert. Er dient mit seiner Zylinderaussenfläche 18 als Referenz- und Eichfläche, die mit den Bearbeitungswerkzeugen zur Kalibrierung angefahren werden kann. Die Ausnehmung 19 stellt sicher, dass der Verstärkungsbereich nur in einer Position in die Bearbeitungsvorrichtung eingesetzt werden kann. Somit bilden die Zylinderaussenfläche 18 und die Ausnehmung 19 die Orientierungsmittel, mit denen der Verstärkungsbereich 11 in eine zum Bearbeitungswerkzeug definierte Lage gebracht werden kann.

Der Halterteil 13 weist eine im wesentlichen rotationssymmetrische Form auf, die bei einer rotativen Bearbeitung als Rotationszentrum und zur Festlegung des Halterteils in der Bearbeitungsmaschine dient, was mittels Stellschraube oder Spannzange bewerkstelligt wird. Der Halterteil 13 kann bei der Herstellung des vollständigen Verbundkörpers durch Formergänzung zum Verbundblock ebenfalls als Halter z.B. in einer Pressform dienen.

Der Halterteil 13 bzw. der Referenz- und Kalibrierungsteil 12 und der Verstärkungsbereich 11 sind in dieser Ausführung direkt miteinander verbunden. Die relative Lage von Referenz- und Kalibrierungsteil 12 und Verstärkungsbereich 11 sollte bei allen Rohlingen eines Typs möglichst immer gleich sein, so dass sich die Position des Verstärkungsbereichs aufgrund der Referenzfläche 18 und der Ausnehmung 19 bestimmen lässt.

In Fig. 3 ist eine erste Variante eines vollständigen Rohlings 20 mit Verstärkungsbereich 11 gemäss Fig. 2. Zusammen bilden der Bearbeitungsbereich 9 und der Verstärkungsbereich 11 den durch Abtragung formbaren Körper bzw. Verbundkörper des Rohlings.

Auf der okklusal zugeordneten Verbundkörperoberfläche 21, die gleich orientiert ist wie die Ausnehmung 19, sind die von okklusal gesehenen Konturen 22 des innenliegenden Verstärkungsbereiches 11 aufgezeichnet, und auf der Seitenfläche 23 die von seitlich gesehenen Konturen 24. Diese Konturen dienen der Orientierung über die Innenlage des Verstärkungsbereiches 11 im Rohling 20.

In Fig. 4 ist eine zweite, zur Zeit bevorzugte Variante eines vollständigen Rohlings 20 perspektivisch dargestellt. Hier besteht der Rohling aus einer Vielzahl von ebenen Laminatschichten, die z. B. mittels Komposit und/oder Polymer zusammengefügt wurden. In einem obersten Bereich A sind Schichten 30 aus einem Material angeordnet, welches möglichst hohe Beständigkeit gegen Kauabrasion besitzt, vorzugsweise ein hartes Material. In einem mittleren Bereich B liegen Schichten 31 aus einem Keramikmaterial mit hoher Bruchfestigkeit, in einem unteren Bereich Schichten 32 geringerer Härte und Festigkeit, z. B. aus Komposit. Komposit ist leichter maschinell bearbeitbar als Keramik, so dass der Rohling durch Kompositanteile bezüglich seiner maschinellen und manuellen Bearbeitbarkeit optimiert werden kann.

Der Bereich A bildet einen Kaufunktionsbereich, aus welchem die okklusale Oberfläche der Rekonstruktion gebildet wird, der Bereich B bildet den Verstärkungsbereich, der Bereich C den Bearbeitungsbereich.

Im Rohling nach Fig. 4 sind die Laminatschichten eben ausgeführt. Dies ist herstellungstechnisch besonders einfach. Es ist jedoch auch denkbar, dass die Schichten gekrümmt sind und insbesondere sphärisch oder zylindrisch angeordnet sind. Durch solche Geometrien wird eine grössere Festigkeit erreicht. Ferner kann der Verlauf des Verstärkungsbereichs besser dem jeweiligen Kraftverlauf angepasst werden.

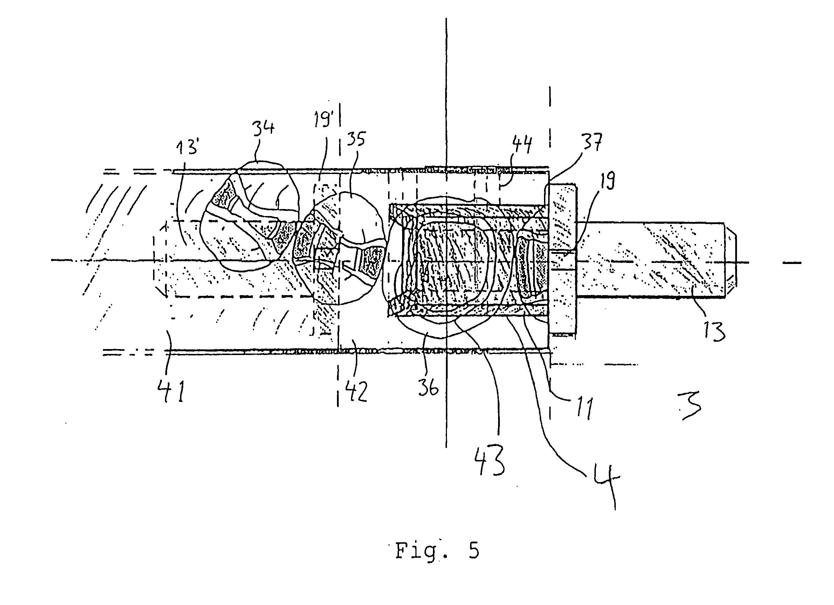

Fig. 5 illustriert die Orientierung eines Rohlings zur Bearbeitung. Hierbei wird ein Rohling gemäss Fig. 2 mit dem gestrichelt angedeuteten u-förmigen Verstärkungsbereich gezeigt - eine entsprechende Ausrichtung gilt jedoch auch für einen Rohling mit ebenem Verstärkungsbereich (wie z.B. im Rohling nach Fig. 4), wobei in diesem Falle die laterale und longitudinale Ausrichtung jedoch weniger kritisch ist.

Fig. 5 zeigt auch die Anordnung einer dreidimensional messenden Mundkamera mit ihrem Schaft 41 und dem Aufnahmefenster 42 zu einer Zahnreihe mit den Zähnen 34, 35, 36 und einem Teil des Zahnes 37. Eine entsprechende Mundkamera ist z.B. in der bereits erwähnten Schrift von H. Mörmann und M. Brandestini, "Die CEREC Computer Reconstruction*"*, 1989, Quintessenz Verlags-GmbH, Berlin, ISBN 3-87652-550-0, beschrieben. Im Beispiel nach Fig. 5 ist der Zahn 36 mit einer Kronenstumpfpräparation 43 versehen. Das Aufnahmefenster entspricht in seinen in der Zeichenebene liegenden x- und y-Massen praktisch denen eines Verbundkörpers für Molarenkronen. Mit Hilfe von auf dem Monitor in der Kamerasuchphase eingeblendeten Konturen des Verstärkungsbereichs 11 gemäss Fig. 2 ist es möglich, den Verstärkungsbereich optimal bestimmungsgemäss an die Kronenstumpfpräparation 43 anzulegen. Der ebenfalls dargestellte Werkstückhalter 13 mit der Ausnehmung 19 verdeutlichen die Lagebeziehung des gesamten Verbundkörpers zur Konstruktionsvorlage. Die Darstellung des Werkstückhalters 13' mit der Ausnehmung 19' stellt die Lagebeziehung bei Verwendung der Verbundkörpervariante gemäss Fig. 2 dar, wobei die Linien 44 die distale Begrenzung dieses Verstärkungsbereichs anzeigen.

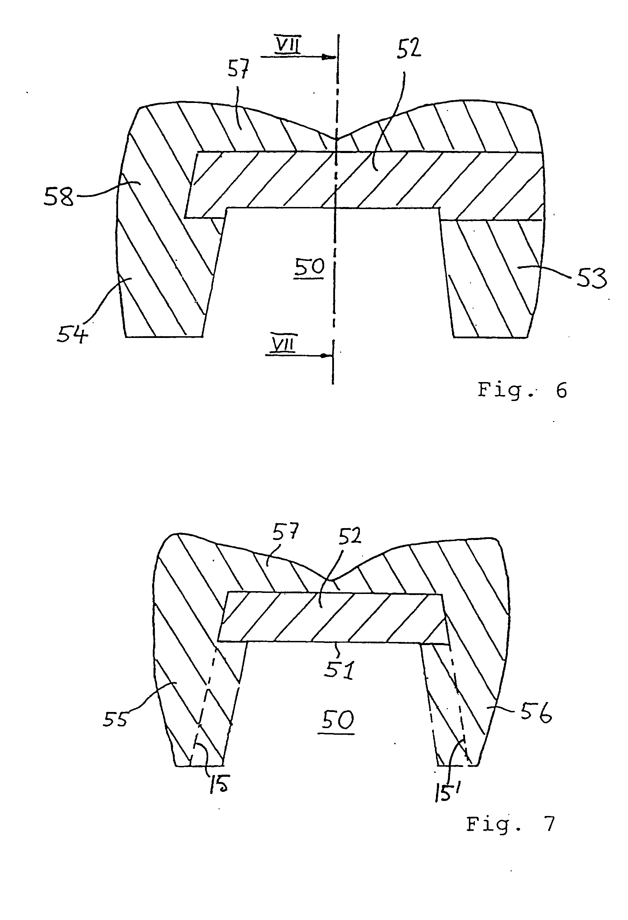

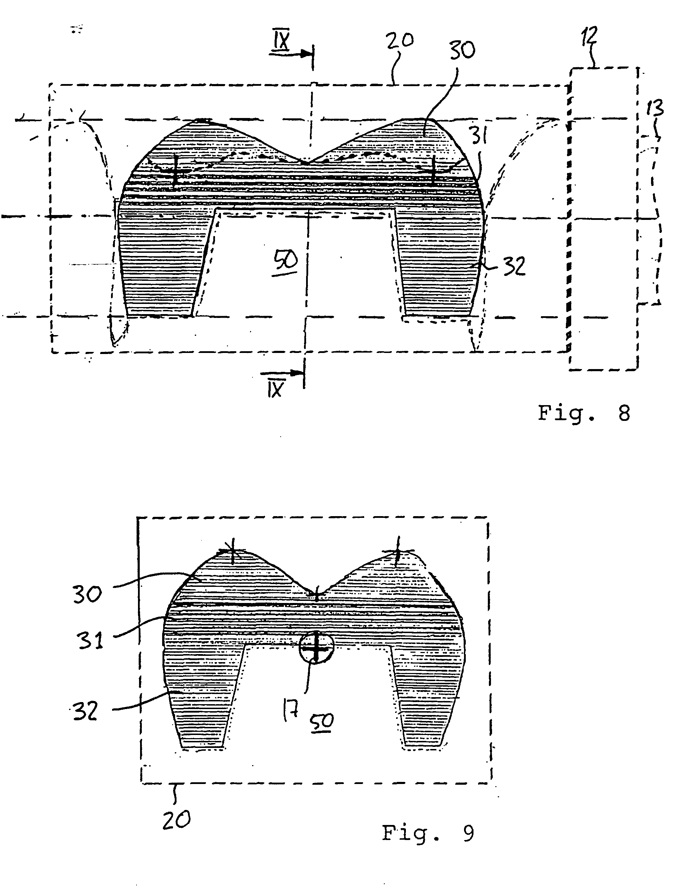

Eine fertige Krone eines Backenzahns hergestellt aus dem Rohling nach Figur 3 wird in den Figuren 6 und 7 gezeigt. Die Krone weist die dem Fachmann bekannte Formgebung mit einer kegelstumpfförmigen Aussparung 50 zur Aufnahme des Kronenstumpfs des Zahns auf. Der Rohling wurde so formgeschliffen, dass der Verstärkungsbereich eine innen liegende Verstärkungsplatte 52 im okklusalen Bereich bildet, wo die grössten Belastungen auftreten. Diese Platte weist eine Dicke von mindestens 0.5 mm auf.

Wird die in Fig. 2 gestrichelt gezeichnete u-Form des Verstärkungsbereichs verwendet, so bilden die Schenkel 15, 15' innenliegenden Verstärkungen der bukkalen und oralen Kronenwände 55, 56. Die distale Kronenwand 53 besteht teilweise aus Verstärkungsmaterial vom werkstückhalterseitigen Bereich des Verstärkungsbereichs, während die mesiale Wand nur durch das Ende des Verstärkungsbereichs verstärkt wird. Die Aussenseiten der mesialen, oralen, bukkalen und okklusalen Kronenwände 54, 55, 56, 57 werden vom Bearbeitungsbereich des Rohlings gebildet.

Die Figuren 8 und 9 zeigen eine fertige Krone hergestellt aus einem laminierten Rohling, wie er in Fig. 4 dargestellt ist, wobei die Umrisse des Rohlings 20 und des Befestigungsmittels 12, 13 gestrichelt angedeutet sind. In diesem Falle bilden die Schichten 31 des Verstärkungsbereichs eine Verstärkungsplatte im okklusalen Teil der Rekonstruktion. Die natürlicherweise sehr harte okklusale Zahnoberfläche wird von den Schichten 30 des Kaufunktionsbereichs gebildet. Die Kronenwände wurden aus den Schichten 32 des Bearbeitungsbereichs geformt. Da alle Laminatschichten bis an die Oberfläche der Krone treten, sollten sie aus zahnfarbenem Material bestehen.

- Wie aus den Figuren 6 - 9 ersichtlich ist, muss zur Herstellung der Krone vor allem Material des Bearbeitungsbereichs und nur wenig Material des Verstärkungs- bzw. Kaufunktionsbereichs abgetragen werden. Da der Kaufunktionsbereich aus der Mitte des Rohlings etwas versetzt ist, muss auch im Bereich der Aussparung 50 nur wenig des harten Verstärkungsmaterials entfernt werden. Dadurch braucht das Formschleifen weniger Zeit und die Bearbeitungswerkzeuge werden geschont.

In den soweit gezeigten Ausführungsbeispielen bestand der Körper des Rohlings aus zwei bis drei Materialbereichen, dem Verstärkungsbereich, dem Bearbeitungsbereich und ggf. dem Kaufunktionsbereich. Es ist aber auch möglich, dass mehr als nur zwei bzw. drei Komponenten den Verbundkörper bilden. Es ist denkbar, dass anstelle klar definierter Phasengrenzen zwischen den Komponenten des Verbundkörpers kontinuierliche oder fein abgestufte Materialübergänge bzw. Materialgradienten gebildet werden. In der laminierten Ausführung nach Fig. 4, können die einzelnen Laminatschichten z.B. zunehmend härter, fester, elastischer oder weicher werden. Die härtesten Laminatschichten werden vorzugsweise im oberen Bereich des Rohlings angeordnet werden. Unter diesen härtesten Schichten kommen Schichten mit zunehmend grösserer Bruchfestigkeit zum Einsatz, welche den Verstärkungsbereich bilden. Diese gehen dann in zunehmend weichere Schichten des Bearbeitungsteils über. Es kann also, dem natürlichen Vorbild folgend, von den Höckerspitzen bis zum Zahnhals ein kontinuierlicher Übergang von abrasionsresistentem, rigidem Material (z.B. Keramik) zu resilienterem Material (z.B. Komposit) erfolgen, wodurch die Übertragung und Verteilung der Kaukräfte auf den natürlichen Restzahn ausgeglichener wird. Beispielsweise wird im Bereich der Höcker antagonistenfreundliches und abrasionsresistentes Material angeordnet. Im Bereich des okklusalen Plateaus kommt möglichst bruchfestes Material zur Bildung des Verstärkungsbereichs zum Einsatz. Die mittleren und zervikalen Bereiche werden aus mit geringem Aufwand bearbeitbarem Material gebildet. Die optischen und/oder röntgenoptischen Eigenschaften der Verbundkörperschichten können bezüglich der Transluzenz bzw. Opazität dem Erscheinungsbild des natürlichen Zahnes angepasst werden.

## Patentansprüche

1. Rohling zur Herstellung eines künstlichen Zahnteils mit einem durch Materialabtragung formbaren Körper und Befestigungsmitteln (12, 19) zur raumorientierten Befestigung des Rohlings in einem Bearbeitungsgerät, wobei der Körper einen ersten Bereich (11, B) und einen zweiten Bereich (9, C) aufweist, wobei der erste Bereich (11, B) eine höhere Bruchfestigkeit als der zweite Bereich (9) aufweist, **dadurch gekennzeichnet, dass** der erste Bereich (11, B) die Form einer im wesentlichen ebenen Platte aufweist.

2. Rohling nach Anspruch 1, **dadurch gekennzeichnet, dass** der erste Bereich (11, B) in vordefinierter räumlicher Relation zu den Befestigungsmitteln (12, 19) steht, derart, dass der erste Bereich (11) mittels der Befestigungsmittel (12, 19) ausrichtbar ist.

3. Rohling nach einem der vorangehenden Ansprüche, **dadurch gekennzeichnet, dass** der Körper aus Keramik, Glas und/oder Kompositwerkstoff besteht.

4. Rohling nach einem der vorangehenden Ansprüche, **dadurch gekennzeichnet, dass** der erste Bereich (11, B) mindestens teilweise aus Oxid-Keramik, vorzugsweise aus Aluminiumoxid, Zirkonoxid, Magnesiumoxid, Siliziumoxid oder Kombinationen hiervon, oder aus hochfestem Polymermaterial besteht.

5. Rohling nach einem der vorangehenden Ansprüche, **dadurch gekennzeichnet, dass** der zweite Bereich (9, C) mindestens teilweise aus Keramik, Kunststoff oder Kompositwerkstoff besteht.

6. Rohling nach einem der vorangehenden Ansprüche, **dadurch gekennzeichnet, dass** die vom ersten Bereich (11, C) gebildete Platte eine sich durch den ganzen Körper erstreckende Verstärkungsschicht ist.

7. Rohling nach einem der vorangehenden Ansprüche, **dadurch gekennzeichnet, dass** der erste Bereich (11, C) mindestens eine Dicke von 0.5 mm aufweist.

8. Rohling nach einem der vorangehenden Ansprüche, **dadurch gekennzeichnet, dass** der Körper eine Vielzahl im wesentlichen ebener Laminatschichten (30, 31, 32) aufweist, wobei mindestens eine Laminatschicht (31) den ersten Bereich (11, B) bildet und eine erhöhte Bruchfestigkeit aufweist.

9. Rohling nach Anspruch 8, **dadurch gekennzeichnet, dass** zur Erhöhung der Bruchfestigkeit mindestens ein Teil der Laminatschichten mechanisch gegeneinander verspannt sind, vorzugsweise aufgrund unterschiedlicher Wärmeausdehnungskoeffizienten.

10. Rohling nach einem der vorangehenden Ansprüche, **dadurch gekennzeichnet, dass** der erste Bereich (11, B) auf der einen Seite an einen Kaufunktionsbereich (A) anschliesst und auf der anderen Seite an den zweiten Bereich (9, C), wobei der Kaufunktionsbereich (A) eine grössere Abrasionsresistenz als der zweite Bereich (9, C), und vorzugsweise eine grössere Abrasionsresistenz als der erste Bereich (11, B), aufweist.

11. Rohling nach Anspruch 10, **dadurch gekennzeichnet, dass** der erste Bereich (11, B) eine höhere Bruchfestigkeit als der Kaufunktionsbereich (A) aufweist.

12. Rohling nach einem der vorangehenden Ansprüche, **dadurch gekennzeichnet, dass** der erste Bereich (11, B) asymmetrisch aus dem Zentrum des Körpers versetzt ist.

13. Rohling nach einem der vorangehenden Ansprüche, **dadurch gekennzeichnet, dass** der erste Bereich (11, B) und/oder der zweite Bereich (9, C) und/ oder gegebenenfalls der Kaufunktionsbereich (A) mindestens teilweise aus offenporiger Keramik bestehen, und dass in den Poren und zwischen den Bereichen ein Füllmaterial, vorzugsweise ein Polymer, angeordnet ist.

14. Verfahren zur Herstellung eines künstlichen Zahnteils mittels Materialabtragung bei einem Rohling, wobei der Rohling mindestens aus einem ersten Bereich (11, B) und einem zweiten Bereich (9, C) besteht, wobei der erste Bereich (11, B) eine höhere Bruchfestigkeit als der zweite Bereich (9, C) aufweist, und wobei Material des Rohlings derart abgetragen wird, dass im resultierenden Zahnteil Material des ersten Bereichs eine Verstärkungsstruktur des Zahnteils bildet, **dadurch gekennzeichnet, dass** im resultierenden Zahnteil Material des ersten Bereichs eine Verstärkungsstruktur in einem okklusalen Bereich des Zahnteils bildet und dass der erste Bereich (11, B) die Form einer im wesentlichen ebenen Platte aufweist.

15. Verfahren nach Anspruch 14, **dadurch gekennzeichnet, dass** zur Bildung einer Krone im zweiten Bereich (9, C) eine im wesentlichen kegelstumpfförmige Ausnehmung ausgeformt wird.

16. Verfahren nach einem der Ansprüche 14 oder 15, **dadurch gekennzeichnet, dass** der erste Bereich (11, B) auf der einen Seite an einen Kaufunktionsbereich (A) anschliesst und auf der anderen Seite an den zweiten Bereich (9, C), wobei der Kaufunktionsbereich (A) eine grössere Härte als der zweite Bereich (9, B) aufweist, und wobei Material des Rohlings derart abgetragen wird, dass im resultierenden Zahnteil Material des Kaufunktionsbereichs mindestens einen Teil der okklusalen Oberfläche des Zahnteils bildet.

17. Verfahren zum Herstellen eines Rohlings gemäss einem der Ansprüche 1 - 13, **dadurch gekennzeichnet, dass** der erste Bereich (11, B) und der zweite Bereich (9, C) als Schichten zu einem laminierten Verbundkörper zusammengefügt werden.

## Claims

1. Blank for preparing an artificial tooth part with a body for being shaped by material removal and holder means (12, 19) for mounting the blank in a spatial relation in a shaping apparatus, wherein the body comprises a first section (11, B) and a second section (9, C), wherein the first section (11, B) has a higher breaking strength than the second section (9, C), **characterised in that** the first section (11, B) has the shape of a substantially flat plate.

2. Blank of claim 1, **characterised in that** the first section (11, B) is in a predefined spatial relation in respect to the holder means (12, 19), such that the first section can be aligned by the holder means.

3. Blank of anyone of the preceding claims, **characterised in that** the body is made of ceramics, glass and/or composite material.

4. Blank of anyone of the preceding claims, **characterised in that** the first section (11, B) is at least partially made of oxide ceramics, preferably aluminium oxide, circonium oxide, magnesium oxide, silicon oxide or combinations thereof, or of a high strength polymer.

5. Blank of anyone of the preceding claims, **characterised in that** the second section (9, C) is at least partially made of ceramics, polymer, composite.

6. Blank of anyone of the preceding claims, **characterised in that** the plate formed by the first section (11, C) is a reinforcing layer extending through the whole body.

7. Blank of anyone of the preceding claims, **characterised in that** the first section (11, C) has a thickness of at least 0.5 mm.

8. Blank of anyone of the preceding claims, **characterised in that** the body comprises a plurality of substantially flat laminate layers (30, 31, 32), wherein at least one of said laminate layers (31) forms the first section (11, B) and has a higher breaking strength.

9. Blank of claim 8, **characterised in that** in order to increase the breaking strength at least a part of the laminate layers is mutually mechanically strained, preferably due to different thermal expansion coefficients.

10. Blank of anyone of the preceding claims, **characterised in that** one side of the first section (11, B) is attached to a masticative section (A) and the other side is attached to the second section (9, C), wherein the masticative section (A) has a higher resistance to abrasion than the second section (9, C), and preferably has a higher resistance to abrasion than the first section (11, B).

11. Blank of claim 10, **characterised in that** the first section (11, B) has a higher fracture strength than said masticative section (A).

12. Blank of anyone of the preceding claims, **characterised in that** the first section (11, B) is laterally offset from the centre of the body.

13. Blank of anyone of the preceding claims, **characterised in that** the first section (11, B) and/or the second section (9, C) and/or optionally the masticative section (A) are at least partially made of ceramics comprising open pores, and that a filling material, preferably a polymer, is arranged in said pores and between said sections.

14. Method for manufacturing an artificial tooth part by material removal from a blank, wherein the blank comprises at least a first section (11, B) and a second section (9, C), wherein the first section (11, B) has a higher breaking strength than the second section (9, C), and wherein material from the blank is removed such that in the resulting tooth part material of the first section forms a reinforcing structure, **characterised in that** in the resulting tooth part material of the first section forms a reinforcing structure in the occlusal section of the tooth part and the first section (11, B) has the shape of a substantially flat plate.

15. Method of claim 14, **characterised in that** for the formation of a crown in the second section (9, C) a substantially frusto-conical recess is formed.

16. Method of anyone of claims 14 or 15, **characterised in that** one side of the first section (11, B) is attached to a masticative section (A) and the other side is attached to the second section (9, C), wherein the masticative section has a higher resistance to abrasion than the first section (11, B) and wherein the material of the blank is removed such that in the resulting tooth part material of the masticative section forms at least partially the occlusal surface of the tooth part.

17. Method for manufacturing a blank according to claims 1-13, **characterised in that** the first section. (11, B) and the second section (9, C) are joined as layers to form a laminated compound body.

## Revendications

1. Ebauche pour la fabrication d'une partie de dent artificielle, qui présente un corps qui peut être façonné par enlèvement de matière et des moyens de fixation (12, 19) pour fixer l'ébauche dans une orientation spatiale donnée dans un appareil d'usinage, le corps présentant une première zone (11, B) et une deuxième zone (9, C), la première zone (11, B) présentant une résistance à la rupture plus élevée que la deuxième zone (9), **caractérisée en ce que** la première zone (11, B) présente la forme d'une plaque essentiellement plane.

2. Ebauche selon la revendication 1, **caractérisée en ce que** la première zone (11, B) est en relation spatiale prédéfinie par rapport aux moyens de fixation (12, 19) de telle sorte que la première zone (11) puisse être orientée au moyen des moyens de fixation (12, 19).

3. Ebauche selon l'une des revendications précédentes, **caractérisée en ce que** le corps est constitué de céramique, de verre et/ou d'un matériau composite.

4. Ebauche selon l'une des revendications précédentes, **caractérisée en ce que** la première zone (11, B) est constituée au moins en partie de céramique d'oxyde, de préférence d'oxyde d'aluminium, d'oxyde de zirconium, d'oxyde de magnésium, d'oxyde de silicium ou de combinaisons de ces oxydes, ou d'un matériau polymère à haute résistance.

5. Ebauche selon l'une des revendications précédentes, **caractérisée en ce que** la deuxième zone (9, C) est constituée au moins en partie de céramique, de matière synthétique ou d'un matériau composite.

6. Ebauche selon l'une des revendications précédentes, **caractérisée en ce que** la plaque formée par la première zone (11, C) est une couche de renfort qui s'étend dans la totalité du corps.

7. Ebauche selon l'une des revendications précédentes, **caractérisée en ce que** la première zone (11, C) présente une épaisseur d'au moins 0,5 mm.

8. Ebauche selon l'une des revendications précédentes, **caractérisée en ce que** le corps présente une pluralité de couches stratifiées (30, 31, 32) essentiellement planes, au moins une couche (31) du stratifié formant la première zone (11, B) et présentant une résistance accrue à la rupture.

9. Ebauche selon la revendication 8, **caractérisée en ce que** pour augmenter la résistance à la rupture, au moins une partie des couches du stratifié sont serrées mécaniquement les unes contre les autres, de préférence grâce à leurs différents coefficients de dilatation thermique.

10. Ebauche selon l'une des revendications précédentes, **caractérisée en ce que** la première zone (11, B) se raccorde sur un côté à une zone (A) qui résiste à la fonction de mastication et de l'autre côté à la deuxième zone (9, C), la zone (A) qui résiste à la fonction de mastication présentant une plus grande résistance à l'abrasion que la deuxième zone (9, C) et de préférence une plus grande résistance à l'abrasion que la première zone (11, B).

11. Ebauche selon la revendication 10, **caractérisée en ce que** la première zone (11, B) présente une plus grande résistance à la rupture que la zone (A) qui résiste à la fonction de mastication.

12. Ebauche selon l'une des revendications précédentes, **caractérisée en ce que** la première zone (11, B) est décalée de manière asymétrique par rapport au centre du corps.

13. Ebauche selon l'une des revendications précédentes, **caractérisée en ce que** la première zone (11, B) et/ou la deuxième zone (9, C) et/ou éventuellement la zone (A) qui résiste à la fonction de mastication sont au moins en partie constituées de céramique à pores ouverts, et **en ce qu'**un matériau de charge, de préférence un polymère, est disposé dans les pores et entre les zones.

14. Procédé de fabrication d'une pièce de dent artificielle par enlèvement de matière sur une ébauche, l'ébauche étant constituée au moins d'une première zone (11, B) et d'une deuxième zone (9, C), la première zone (11, B) présentant une résistance à la rupture plus élevée que la deuxième zone (9, C), du matériau étant enlevé de l'ébauche de telle sorte que dans la pièce de dent ainsi obtenue, le matériau de la première zone forme une structure de renfort de la partie de dent, **caractérisé en ce que** dans la partie de dent ainsi obtenue, le matériau de la première zone forme une structure de renfort dans une zone occlusale de la partie de dent et **en ce que** la première zone (11, B) présente la forme d'une plaque essentiellement plane.

15. Procédé selon la revendication 14, **caractérisé en ce que** pour former une couronne, une découpe essentiellement tronconique est ménagée dans la deuxième zone (9, C).

16. Procédé selon l'une des revendications 14 ou 15, **caractérisé en ce que** la première zone (11, B) se raccorde sur un côté à une zone (A) qui résiste à la fonction de mastication et de l'autre côté à la deuxième zone (9, C), la zone (A) qui résiste à la fonction de mastication présentant une dureté plus élevée que la deuxième zone (9, B) et le matériau de l'ébauche étant enlevé de telle sorte que dans la partie de dent ainsi obtenue, le matériau de la zone qui résiste à la fonction de mastication forme au moins une partie de la surface occlusale de la partie de dent.

17. Procédé de fabrication d'une ébauche selon l'une des revendications 1 à 13, **caractérisé en ce que** la première zone (11, B) et la deuxième zone (9, C) qui présentent la forme de couches sont rassemblées pour obtenir un corps composite stratifié.
